# EUROPÄISCHE PATENTANMELDUNG

(11) **EP 1 995 396 A2**
(43) Veröffentlichungstag der Anmeldung: **26.11.2008**
(21) Anmeldenummer: 08450071.9
(22) Anmeldetag: 07.05.2008
(51) Int. Cl.: E04G 21/32

(54) **Anschlagvorrichtung für eine Absturzsicherung**

(30) Priorität: 22.05.2007 AT 3292007 U
(71) Anmelder: Innotech Holding GmbH, 4694 Ohlsdorf (AT)
(72) Erfinder: Reiter, Gerald, 4694 Ohlsdorf (AT)
(74) Vertreter: Hübscher, Helmut

(57) **Zusammenfassung**

Es wird eine Anschlagvorrichtung für eine Absturzsicherung mit einer in einer Bohrung (8) der Tragkonstruktion (9) eines Daches befestigbaren, einen Anschlagpunkt (11) aufnehmenden Stütze beschrieben, die ein Stützrohr (1) und einen in das Stützrohr (1) eingesetzten Ankerbolzen (3) umfasst. Um vorteilhafte Versetzungsbedingungen für die Anschlagvorrichtung zu schaffen, wird vorgeschlagen, dass das Stützrohr (1) einen Einschlagdübel mit einem geschlitzten Einschlagende (2) bildet, in das ein Spreizkonus (4) am zugehörigen Ende des das Stützrohr (1) durchsetzenden Ankerbolzens (3) eingreift, dass der mit einem Gewinde versehene Ankerbolzen (3) eine drehbar gelagerte Stellmutter (5) durchsetzt, die über einen Gleitring (6) auf der dem Einschlagende (2) gegenüberliegenden Stirnseite des Stützrohrs (1) axial abgestützt ist, und dass der über die Stellmutter (5) vorstehende Endabschnitt (12) des Ankerbolzens (3) den Anschlagpunkt (11) trägt.

## Beschreibung

Die Erfindung bezieht sich auf eine Anschlagvorrichtung für eine Absturzsicherung mit einer in einer Bohrung der Tragkonstruktion eines Daches befestigbaren, einen Anschlagpunkt aufnehmenden Stütze, die ein Stützrohr und einen in das Stützrohr eingesetzten Ankerbolzen umfasst.

Zur Vereinfachung der Montage von Anschlagvorrichtungen zum Anschlagen einer persönlichen Schutzausrüstung ist es bekannt (EP 1 403 446 A2), anstelle von üblichen Ankerplatten eine Stütze für den Anschlagpunkt vorzusehen, die einen in eine Bohrung der Tragkonstruktion eines Daches einschraubbaren Ankerbolzen und ein Stützrohr umfasst, das auf den versetzten Ankerbolzen aufgeschraubt wird. Es ergeben sich allerdings hinsichtlich der Abtragung der geforderten statischen und dynamischen Belastungen Schwierigkeiten, weil alle Belastungen bei einem Sturz über das Stützrohr aufgenommen werden müssen, auf dem der Anschlagpunkt für die persönliche Schutzausrüstung mit Hilfe einer in das Stützrohr eingreifenden Befestigungsschraube befestigt ist.

Der Erfindung liegt somit die Aufgabe zugrunde, eine Anschlagvorrichtung für eine Absturzsicherung der eingangs geschilderten Art so auszugestalten, dass unter Wahrung einfacher Montagebedingungen die auftretenden Sturzlasten vorteilhaft auf die Tragkonstruktion des Daches abgetragen werden können.

Die Erfindung löst die gestellte Aufgabe dadurch, dass das Stützrohr einen Einschlagdübel mit einem geschlitzten Einschlagende bildet, in das ein Spreizkonus am zugehörigen Ende des das Stützrohr durchsetzenden Ankerbolzens eingreift, dass der mit einem Gewinde versehene Ankerbolzen eine drehbar gelagerte Stellmutter durchsetzt, die über einen Gleitring auf der dem Einschlagende gegenüberliegenden Stirnseite des Stützrohrs axial abgestützt ist, und dass der über die Stellmutter vorstehende Endabschnitt des Ankerbolzens den Anschlagpunkt trägt.

Durch die Ausbildung der Stütze für den Anschlagpunkt als Einschlagdübel werden einfache Montagebedingungen für die Anschlagvorrichtung sichergestellt, wobei sich allerdings die Schwierigkeit ergibt, die ausreichende Verankerung des Einschlagdübels in der Tragkonstruktion des Daches zu gewährleisten. Dies wird dadurch erreicht, dass die Stellmutter, mit deren Hilfe der Spreizkonus über den Ankerbolzen in das geschlitzte Einschlagende eingezogen wird, um das Einschlagende aufzuweiten und an die Wand der Aufnahmebohrung für das Stützrohr anzudrücken, mit einem vorgegebenen Drehmoment angezogen wird. Dieses Anziehmoment kann jedoch nur dann als Maß für den Anpressdruck des aufgeweiteten Einschlagendes an die Bohrungswandung gewertet werden, wenn die sich zwischen der Stellmutter und dem Stützrohr ergebende Reibung keinen maßgebenden Einfluss auf das Anziehmoment hat. Dies gelingt dadurch, dass die Stellmutter über einen Gleitring auf der Stirnseite des Stützrohres axial abgestützt wird, sodass das Reibungsmoment durch die entsprechend wählbaren Reibungsverhältnisse zwischen Gleitring und Stellmutter bestimmt wird. Unter der Voraussetzung, dass eine vorgegebene, vorzugsweise durch eine Markierung am Stützrohr angezeichnete Mindesteinschlagtiefe für das Stützrohr eingehalten wird, kann somit über das Anzugsmoment der Stellmutter die Verankerung der Stütze für den Anschlagpunkt in der Aufnahmebohrung der Tragkonstruktion mit geringem Aufwand überprüft werden. Auf den über die Stellmutter vorstehenden Endabschnitt des Ankerbolzens kann der Anschlagpunkt aufgesteckt und mit einer Mutter gesichert werden. Da der den Anschlagpunkt aufnehmende Ankerbolzen das Stützrohr durchsetzt und mit dem Stützrohr verspannt ist, werden die auftretenden Kräfte im Fall eines Sturzes sowohl vom Ankerbolzen als auch vom Stützrohr aufgenommen und an die Tragkonstruktion abgetragen, was vorteilhafte Belastungsverhältnisse schafft.

Da der Ankerbolzen das Stützrohr mit Spiel durchsetzt, kann der Ankerbolzen selbst keine ausreichende Führung für die Stellmutter darstellen. Um in diesem Zusammenhang einfache Konstruktionsverhältnisse zu schaffen, kann die Stellmutter den Gleitring übergreifen und am Außenumfang des Stützrohrs geführt werden, sodass das Stützrohr die Zentrierung der Stellmutter übernimmt, die den Gleitring nach außen abdeckt und daher vor Witterungseinflüssen schützt.

Um das Eintreiben des Stützrohrs in die Aufnahmebohrung der Tragkonstruktion zu erleichtern, kann das Stützrohr im Bereich des Einschlagendes einen Endabschnitt mit einem größeren Außendurchmesser aufweisen, sodass sich im Anschluss an das verdickte Einschlagende ein größeres Spiel zwischen der Bohrungswand und dem Stützrohr ergibt, wodurch das Versetzen der Stütze der Anschlagvorrichtung erleichtert wird.

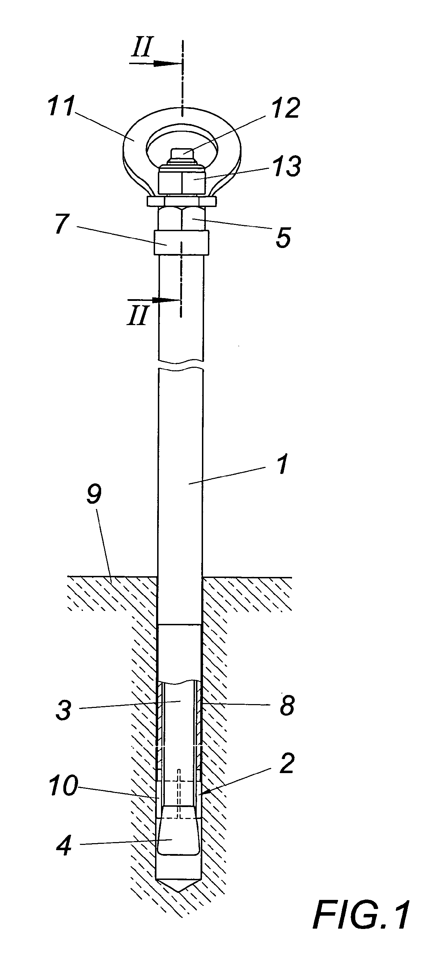

In der Zeichnung ist der Erfindungsgegenstand beispielsweise dargestellt. Es zeigen
- Fig. 1: eine erfindungsgemäße Anschlagvorrichtung für eine Absturzsicherung in einer zum Teil aufgerissenen Seitenansicht und

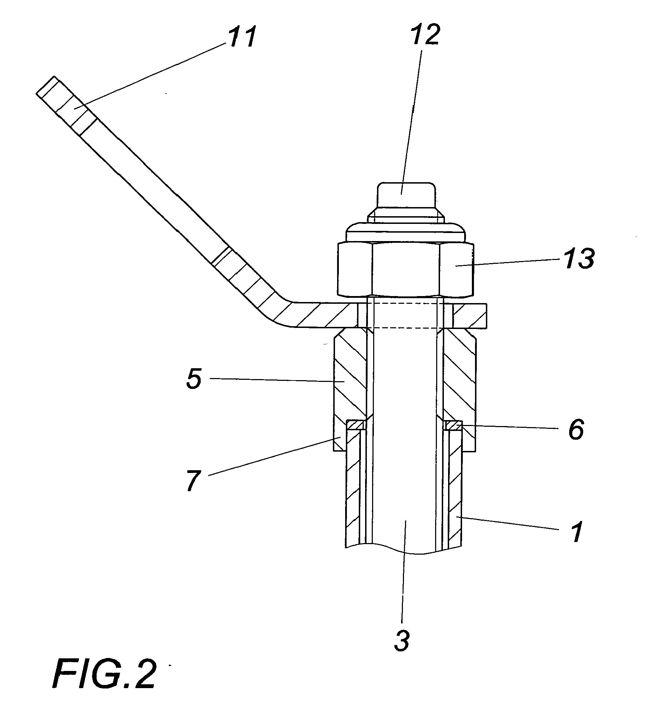

- Fig. 2: einen Schnitt nach der Linie II-II der Fig. 1 in einem größeren Maßstab.

Die dargestellte Anschlagvorrichtung umfasst ein als Einschlagdübel nützbares Stützrohr 1 mit einem geschlitzten Einschlagende 2 sowie einen das Stützrohr 1 mit Spiel durchsetzenden Ankerbolzen 3, der an seinem dem Einschlagende 2 des Stützrohrs 1 zugekehrten Ende einen Spreizkonus 4 trägt. Zur Betätigung des Spreizkonus 4 greift der Ankerbolzen 3, der gemäß dem Ausführungsbeispiel als Gewindebolzen ausgebildet ist, aber auch nur einen entsprechenden Gewindeabschnitt aufweisen kann, in eine Stellmutter 5 ein, die auf der dem Einschlagende 2 gegenüberliegenden Stirnseite des Stützrohrs 1 axial abgestützt ist, und zwar mit Hilfe eines Gleitringes 6. Die Anordnung ist dabei so getroffen, dass die Stellmutter 5 den Gleitring 6 mit einem hülsenartigen Ansatz 7 übergreift, der auf dem Stützrohr 1 geführt ist. Die Stellmutter 5 wird daher gegenüber dem Stützrohr 1 zentriert gehalten und kann wegen der Zwischenlage des Gleitrings 6 unter günstigen Reibungsbedingungen zur Schraubverstellung des Ankerbolzens 3 gedreht werden. Mit dem Anziehen der Stellmutter 5 wird der Spreizkonus 4 am unteren Ende des Ankerbolzens 1 in das Einschlagende 2 des Stützrohres eingezogen, sodass das geschlitzte Einschlagende 2 aufgeweitet wird und sich mit Druck an die Wandung einer Bohrung 8 in der Tragkonstruktion 9 eines Daches anlegt. Damit beim Einschlagen des Stützrohres 1 in die Bohrung 8 die Reibung zwischen dem Stützrohr 1 und der Wandung der Bohrung 8 verringert werden kann, ist das Einschlagende 2 in einem Endabschnitt 10 mit einem größeren Außendurchmesser ausgebildet. Es ergibt sich daher im Anschluss an diesen verdickten Endabschnitt 10 ein größeres Spiel zwischen dem Stützrohr 1 und der Bohrungswandung, was das Eintreiben des Stützrohres 1 in die Bohrung 8 der Tragkonstruktion 9 erleichtert.

Nach einem Anziehen der Stellmutter 5 mit einem vorgegebenen Drehmoment ist die erforderliche Verankerung der Stütze in der Tragkonstruktion 9 sichergestellt. Es kann daher ein Anschlagpunkt 11, üblicherweise eine Anschlagöse, für eine persönliche Schutzausrüstung auf dem über die Stellmutter 5 vorstehenden Endabschnitt 12 des Ankerbolzens 3 aufgesteckt und mit einer Mutter 13 gesichert werden, wobei darauf zu achten ist, dass die freie Drehbarkeit des Anschlagpunktes 11 gewahrt bleibt.

Gegebenenfalls ist das Mitdrehen des Ankerbolzens 3 beim Anziehen der Stellmutter 5 durch ein Gegenhalten zu verhindern, wofür der Ankerbolzen 3 am vorstehenden Endabschnitt 12 mit Abflachungen zum Angreifen einen Schlüssels versehen werden kann.

## Patentansprüche

1. Anschlagvorrichtung für eine Absturzsicherung mit einer in einer Bohrung (8) der Tragkonstruktion (9) eines Daches befestigbaren, einen Anschlagpunkt (11) aufnehmenden Stütze, die ein Stützrohr (1) und einen in das Stützrohr (1) eingesetzten Ankerbolzen (3) umfasst, **dadurch gekennzeichnet, dass** das Stützrohr (1) einen Einschlagdübel mit einem geschlitzten Einschlagende (2) bildet, in das ein Spreizkonus (4) am zugehörigen Ende des das Stützrohr (1) durchsetzenden Ankerbolzens (3) eingreift, dass der mit einem Gewinde versehene Ankerbolzen (3) eine drehbar gelagerte Stellmutter (5) durchsetzt, die über einen Gleitring (6) auf der dem Einschlagende (2) gegenüberliegenden Stirnseite des Stützrohrs (1) axial abgestützt ist, und dass der über die Stellmutter (5) vorstehende Endabschnitt (12) des Ankerbolzens (3) den Anschlagpunkt (11) trägt.

2. Anschlagvorrichtung nach Anspruch 1, **dadurch gekennzeichnet, dass** die Stellmutter (5) den Gleitring (6) übergreift und am Außenumfang des Stützrohrs (1) geführt ist.

3. Anschlagvorrichtung nach Anspruch 1 oder 2, **dadurch gekennzeichnet, dass** das Stützrohr (1) im Bereich des Einschlagendes (2) einen Endabschnitt (10) mit einem größeren Außendurchmesser aufweist.
